# FASCICULE DE BREVET EUROPEEN

(11) **EP 2 479 487 B1**
(45) Date de publication et mention de la délivrance du brevet: **30.08.2017**
(21) Numéro de dépôt: 12150993.9
(22) Date de dépôt: 12.01.2012
(51) Int. Cl.: F21S 8/10, G02B 6/00, G02B 6/25, G02B 6/36, B60Q 1/34, F21S 8/12, F21V 8/00

(54) **Dispositif d'éclairage et/ou de signalisation d'un véhicule automobile et procédé de montage d'un tel dispositif**
Beleuchtungs- und Signalvorrichtung für ein Automobil, und Montageverfahren einer solchen Vorrichtung
Lighting and/or signalling device of an automobile and assembly method of such a device

(30) Priorité: 24.01.2011 FR 1150544
(43) Date de publication de la demande: 25.07.2012
(73) Titulaire: VALEO VISION, 93012 Bobigny (FR)
(72) Inventeur: Sánchez, Ramón, 23600 Martos (ES); Soler, Genaro, 23700 Linares (ES); Borrego, María Luisa, 23600 Martos (ES); Díaz Martín, José María, 23600 Martos (ES)

(56) Documents cités:
- EP-A2- 2 071 228
- WO-A1-2009/142737
- WO-A1-2010/050137
- DE-A1- 10 110 303
- DE-A1-102006 059 902
- DE-A1-102009 004 296

## Description

La présente invention concerne le domaine des dispositifs d'éclairage et/ou de signalisation pour véhicules automobiles. Elle concerne également un procédé de montage d'un tel dispositif.

Dans le domaine de la signalisation des véhicules automobiles, il est connu de réaliser un dispositif de signalisation comprenant une source de lumière et un guide de lumière pour guider la lumière de la source de lumière jusqu'à une face de sortie du guide de sorte à diriger la lumière en sortie du guide selon une direction permettant d'assurer une fonction de signalisation. Une telle structure de dispositif de signalisation est particulièrement intéressante car il permet de résoudre des problèmes d'encombrement. En effet, grâce à une telle structure, il est possible d'obtenir une grande liberté de lieu d'implantation et d'orientation de la source de lumière, le guide de lumière étant conformé et agencé pour canaliser la lumière de la source de lumière à un lieu particulier de sortie de la lumière du dispositif de signalisation.

Néanmoins, une telle structure de dispositif de signalisation pose des problèmes. Notamment, elle pose un problème de montage. En effet, pour assurer une bonne signalisation et un bon rendement de signalisation, il est nécessaire de mettre en position de manière très précise la source de lumière relativement au guide de lumière. Pour ce faire, il est nécessaire qu'un opérateur ait accès au dispositif de signalisation au niveau de l'interface guide de lumière - source de lumière. Cependant, du fait de la compacité des dispositifs d'éclairage et/ou de signalisation modernes, un tel accès est parfois délicat à réaliser.

L'invention a pour but de fournir un dispositif d'éclairage et/ou de signalisation remédiant aux problèmes mentionnés précédemment et améliorants les dispositifs d'éclairage et/ou de signalisation connus de l'art antérieur. En particulier, l'invention propose un dispositif d'éclairage et/ou de signalisation permettant un positionnement précis d'une source de lumière par rapport à un guide de lumière sans que soit nécessaire une intervention d'un opérateur au niveau de l'interface entre la source de lumière et le guide de lumière.

L'invention a pour objet un dispositif d'éclairage et/ou de signalisation d'un véhicule automobile, comprenant une source de lumière montée sur une première partie du dispositif et un guide de lumière monté sur une deuxième partie du dispositif,. Le dispositif comprend des moyens de guidage et des moyens de positionnement permettant de guider le guide de lumière par rapport à la source de lumière et de positionner le guide de lumière par rapport à la source de lumière lors de l'assemblage des première et deuxième parties du dispositif.

Un tel dispositif est par exemple connu du document DE 10 2006 059902. L'invention est définie dans la revendication 1.

La première partie ou la deuxième partie comprend un support sur lequel est montée la source de lumière ou le guide de lumière. Le support et la première ou la deuxième partie sont liés par une liaison glissière dont l'amplitude de mouvement est limitée

Les moyens de guidage peuvent comprendre des rampes ou des pentes destinées à coopérer par contact avec le guide de lumière.

Les moyens de guidage peuvent être situés sur la première partie et/ou sur la deuxième partie et/ou sur une troisième partie du dispositif.

Les moyens de positionnement peuvent comprendre une rainure et une nervure.

Le dispositif peut comprendre des moyens de maintien de la source de lumière sur la première partie et/ou des moyens de maintien du guide de lumière sur la deuxième partie.

Le support est mobile par rapport au reste de la première ou deuxième partie entre deux positions extrêmes et peut être rappelé vers une des positions extrêmes par un moyen de rappel élastique.

Les moyens de guidage et de positionnement peuvent coopérer avec le guide de lumière, notamment avec une extrémité aplatie du guide de lumière, et/ou avec la source de lumière.

De préférence, le dispositif comprend un boîtier fermé par une glace de fermeture, ladite première partie du dispositif comprenant ledit boîtier.

De préférence, le dispositif comprend un masque situé à l'intérieur du boîtier, ladite deuxième partie comprenant ledit masque.

De préférence, l'amplitude de mouvement de la liaison glissière est limitée.

Le montage d'un dispositif d'éclairage et/ou de signalisation selon l'invention sur un véhicule automobile, comprend les étapes suivantes :
- monter une source de lumière sur une première partie,
- monter un guide de lumière sur une deuxième partie,
- assembler les première et deuxième parties l'une à l'autre,
des moyens de guidage et des moyens de positionnement guidant le guide de lumière par rapport à la source de lumière et positionnant le guide de lumière par rapport à la source de lumière lors de l'assemblage des première et deuxième parties du dispositif.

L'assemblage peut provoquer une déformation d'un moyen élastique de rappel par action mécanique de contact du guide de lumière ou de la source de lumière.

De préférence, le dispositif d'éclairage et/ou de signalisation du procédé est un dispositif défini précédemment.

Le dessin annexé représente, à titre d'exemple, un mode de réalisation d'un dispositif d'éclairage et/ou de signalisation pour véhicule automobile selon l'invention.
La figure 1 est une vue en perspective éclatée d'un mode de réalisation d'un dispositif d'éclairage et/ou de signalisation selon l'invention.
Les figures 2 et 3 sont des vues d'une première partie du mode de réalisation du dispositif selon invention.
La figure 4 est une vue en perspective d'un support de source lumineuse destiné à être monté sur la première partie du mode de réalisation du dispositif selon l'invention.
La figure 6 est une vue en coupe verticale du mode de réalisation du dispositif selon l'invention.
La figure 7 est une vue de détail du mode de réalisation du dispositif selon invention au niveau de l'interface entre la source de lumière et le guide de lumière
La figure 8 est une vue en coupe horizontale du mode de réalisation du dispositif selon invention.
La figure 9 est une vue de détail de la première partie du mode de réalisation du dispositif selon invention.
La figure 10 est une vue semblable à la vue de la figure 9, un élément 6 comportant la source de lumière étant présenté préalablement à sa mise en place sur un support sur la première partie.
Les figures 11 et 12 sont des vues de détail du mode de réalisation du dispositif selon invention au niveau de l'interface source de lumière - guide de lumière.
Les figures 13 et 14 sont des vues en coupe de détail du mode de réalisation du dispositif selon l'intention au niveau du support monté sur la première partie.

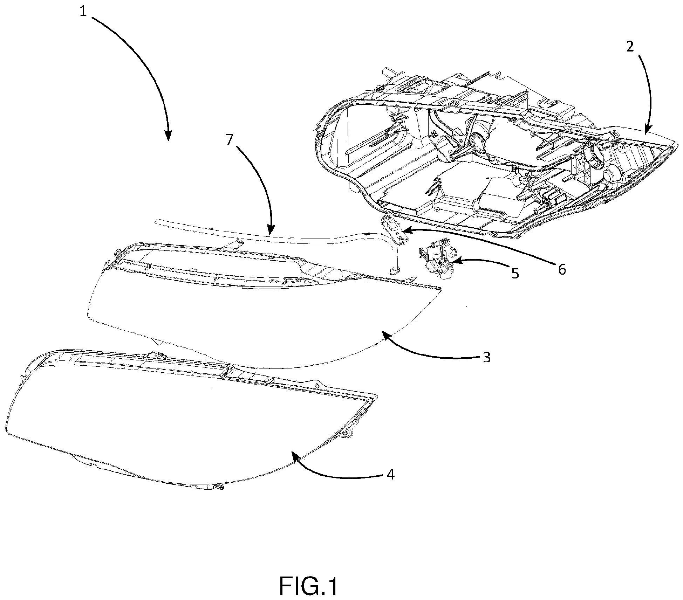

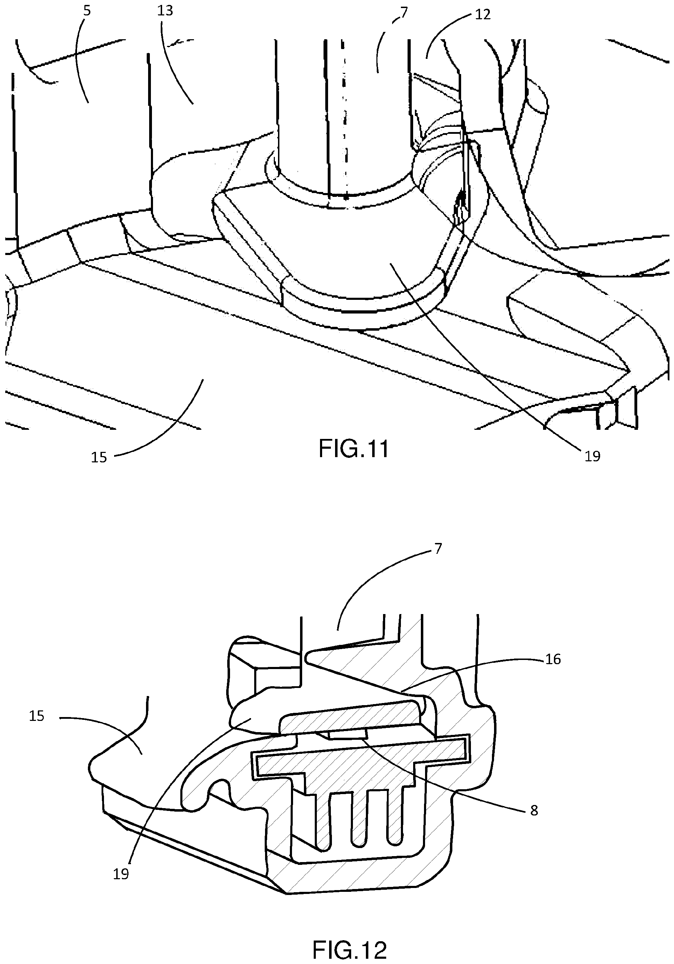

Un mode de réalisation d'un dispositif 1 d'éclairage et/ou de signalisation selon l'invention est décrit ci-après en référence aux figures 1 à 14. Le dispositif d'éclairage et/ou de signalisation est destiné à équiper un véhicule automobile. Il s'agit par exemple d'un dispositif d'éclairage et/ou de signalisation avant d'un véhicule automobile. Le dispositif d'éclairage et/ou de signalisation peut comprendre plusieurs moyens permettant d'assurer des fonctions d'éclairage et/ou de signalisation distinctes. Notamment, le dispositif d'éclairage et/ou de signalisation peut comprendre un moyen permettant d'assurer une fonction lanterne et/ou un moyen permettant d'assurer une fonction feux de croisement et/ou un moyen permettant d'assurer une fonction feux de route et/ou un moyen permettant d'assurer une fonction clignotant et/ou un moyen permettant d'assurer une fonction feux diurnes et/ou un moyen permettant d'assurer une fonction feux antibrouillard.

Ce mode de réalisation du dispositif comprend une source de lumière 8 montée sur une première partie du dispositif et un guide de lumière 7 monté sur une deuxième partie 3 du dispositif. Par exemple, la première partie comprend un boîtier 2 et la deuxième partie comprend un masque 3. Le masque peut par exemple comprendre un réflecteur. De préférence, la source lumineuse 8 est fixée sur un circuit 6 lui-même destiné à être monté sur un support 5 destiné à être assemblé au boîtier. De préférence, le guide de lumière 7 est quant à lui destiné à être monté sur le masque 3. Le boîtier et le masque sont par ailleurs destinés à être assemblé l'un à l'autre. En outre, après l'assemblage du boîtier et du masque, une glace de fermeture 4 est montée pour fermer le boîtier 2.

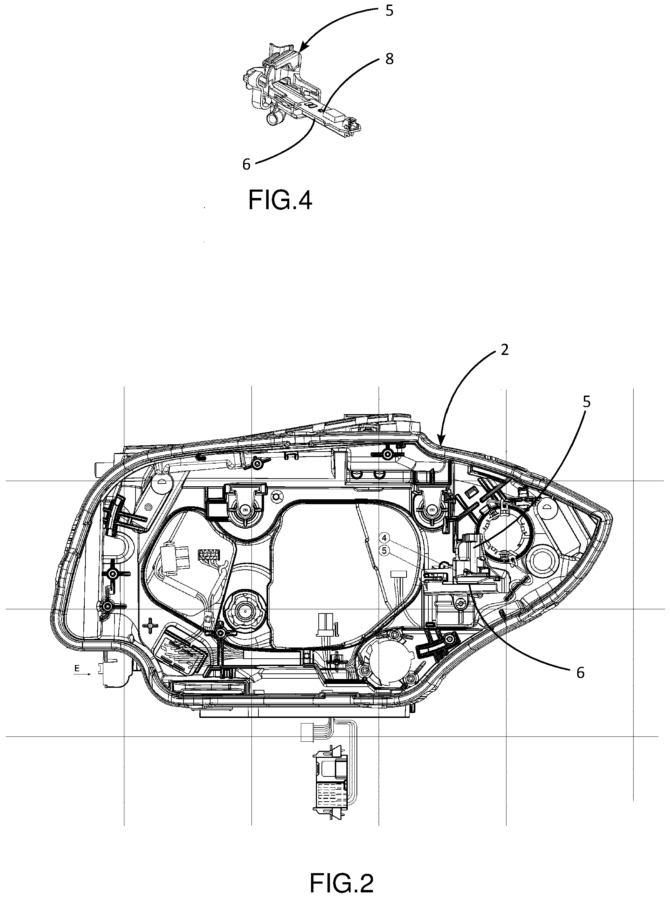

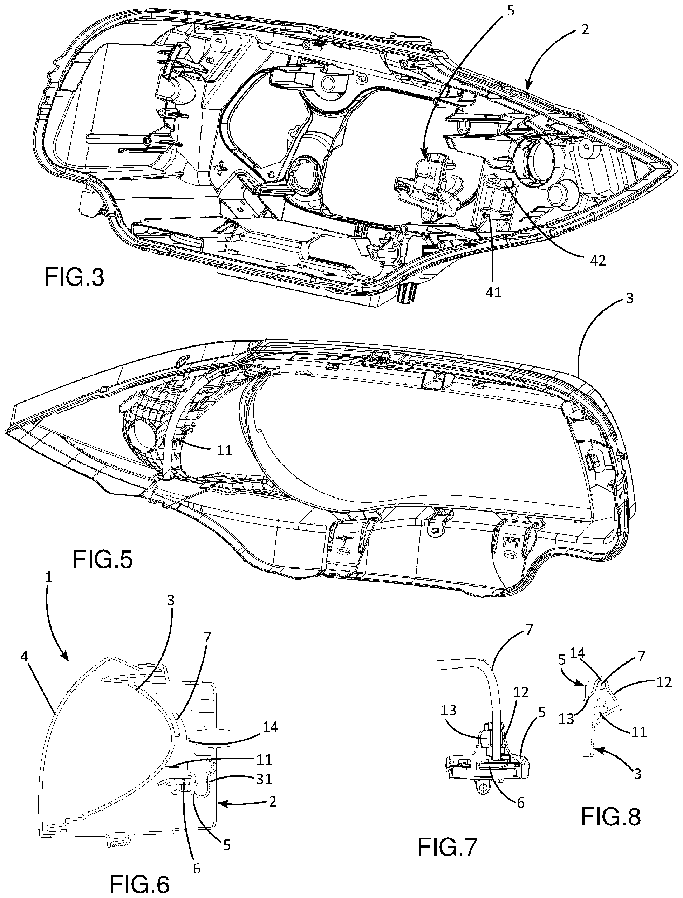

Comme représenté aux figures 2 et 3, le boîtier 2 comprend différentes conformations permettant de mettre en place les moyens d'éclairage et/ou de signalisation mentionnés précédemment, notamment des conformations de type ouverture permettant un accès dans le boîtier et des conformations de fixation pour fixer les moyens d'éclairage et/ou de signalisation au boîtier.

Le boîtier comprend également des moyens 41 et 42 de fixation d'un support 5. La liaison mécanique réalisée entre le boîtier 2 et le support 5 est de préférence du type glissière avec une amplitude de mouvement limitée par des butées. Ceci sera décrit plus en détail plus bas.

Comme représenté aux figures 4, 9, et 10, le support 5 est destiné à recevoir la source de lumière 8, notamment un circuit 6 comprenant la source de lumière 8. La source de lumière est de préférence une diode électroluminescente. De préférence, le support comprend un premier moyen de guidage, comme une rainure 24, destiné à coopérer avec un deuxième moyen de guidage, comme une nervure 23, prévu sur le circuit 6, de sorte à positionner le circuit 6 et donc la source de lumière 8 relativement au support. De préférence, le support comprend encore un moyen d'indexation en position 22, comme un bras 22 élastiquement déformable destiné à coopérer avec un moyen d'indexation en position 21 prévu sur le circuit 6. Le moyen d'indexation en position 21 consiste par exemple en une encoche prévue sur la nervure 23. Ainsi, grâce aux moyens de guidage et au moyen d'indexation position, la source de lumière peut être mise en position de manière précise par rapport au support.

Le support comprend en outre des moyens de guidage 12, 13, 15, 16 et des moyens de positionnement 14, 11 permettant de guider le guide de lumière par rapport à la source de lumière et de positionner le guide de lumière par rapport à la source de lumière lors de l'assemblage du boîtier et du masque.

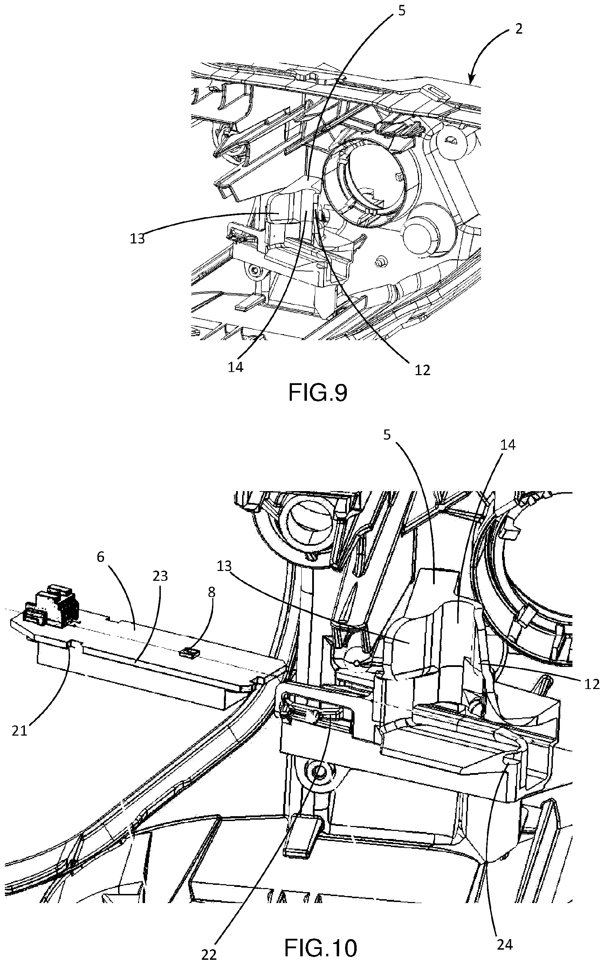

Comme représenté aux figures 7 et 8, ainsi qu'aux figures 9, 11 et 12, le support comprend comme moyen de guidage deux pentes ou rampes 12 et 13 formant un V dont le fond du creux constitue un moyen de positionnement formé par exemple par une portion de cylindre 14. La fonction des pentes 12 et 13 est de guider le guide de lumière vers le moyen de positionnement 14 lors de l'assemblage du boîtier et du masque. Pour ce faire, les pentes 12 et 13 coopèrent avec l'extrémité du guide de lumière par contact lors de l'assemblage du boîtier et du masque. Dans le mode de réalisation représenté, vu de face, si le guide de lumière se trouve trop à droite lors de l'assemblage, il entre en contact avec la pente 13. Ce contact et le mouvement relatif du boîtier et du masque lors de leur assemblage déportent sur la gauche le guide de lumière jusqu'à ce qu'il rejoigne le fond 14 du V. Inversement, si le guide de lumière se trouve trop à gauche lors de l'assemblage, il entre en contact avec la pente 12. Ce contact et le mouvement relatif du boîtier et du masque lors de leur assemblage déportent sur la droite le guide de lumière jusqu'à ce qu'il rejoigne le fond 14 du V.

Par ailleurs, le support comprend également comme moyen de guidage deux pentes ou rampes 15 et 16 formant un V dont la fonction est de guider l'extrémité du guide de lumière relativement à la direction de propagation de la lumière dans le guide au niveau de cette extrémité. Pour ce faire, les pentes 15 et 16 coopèrent avec l'extrémité du guide de lumière par contact lors de l'assemblage du boîtier et du masque. Par exemple, les pentes 15 et 16 coopèrent avec une extrémité aplatie 19 du guide de lumière. Dans le mode de réalisation représentée, vu de face, si le guide de lumière se trouve trop bas lors de l'assemblage, il entre en contact avec la pente 15. Ce contact et le mouvement relatif du boîtier et du masque lors de leur assemblage déportent vers le haut le guide de lumière jusqu'à ce qu'il atteigne sa cote optimale. Inversement, si le guide de lumière se trouve trop haut lors de l'assemblage, il entre en contact avec la pente 16. Ce contact et le mouvement relatif du boîtier et du masque lors de leur assemblage déportent vers le bas le guide de lumière jusqu'à ce qu'il atteigne sa cote optimale.

Comme représenté aux figures 6 et 7, dans la position du guide de lumière obtenue précédemment relativement au support, le guide de lumière se trouve dans une position optimale relativement à la source de lumière 8. Ainsi, pour une énergie électrique donnée consommée au niveau de l'ampoule, on obtient en sortie du guide de lumière un maximum d'intensité lumineuse.

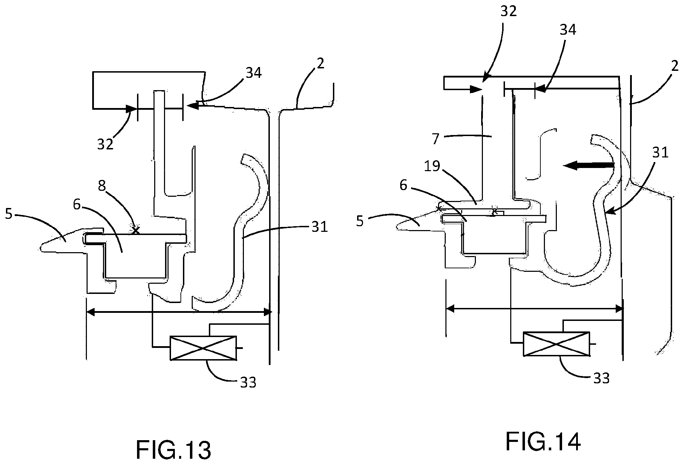

De préférence, comme représenté aux figures 13 et 14, le support est mobile par rapport au boîtier entre deux positions extrêmes représentées aux figures 13 et 14 et est rappelé vers une des positions extrêmes par un moyen de rappel élastique 31. Le moyen de rappel élastique peut par exemple comprendre une lame 31 élastiquement déformable venant en appui contre une face du boîtier. De préférence, le support est mobile relativement au boîtier selon une direction au moins sensiblement parallèle à la direction de mouvement du masque par rapport boîtier lors de leur assemblage. Ainsi, lors de l'assemblage du boîtier et du masque, le support est déplacé contre l'action du moyen de rappel élastique lorsque le guide de lumière est positionné dans le support à son emplacement défini.

Avantageusement, le support 5 est lié au boîtier via une liaison glissière. De préférence, comme représenté aux figures 13 et 14, une première butée 32 est prévue pour limiter le mouvement relatif du support et du boîtier selon l'axe de la glissière dans un premier sens et une deuxième butée 34 est prévue pour limiter le mouvement relatif du support et du boîtier selon l'axe de la glissière dans le deuxième sens opposé au premier sens.

Lors de l'assemblage du masque et du boîtier, le guide de lumière a été préalablement monté sur le masque. Ainsi, le masque comprend de préférence un chemin ménageant un passage pour le guide de lumière et des moyens pour fixer et/ou immobiliser le guide de lumière dans ce chemin. Notamment, le masque peut présenter des nervures 11 de positionnement du guide de lumière sur le masque. Lors de l'opération d'assemblage, l'action mécanique exercée sur le masque pour son assemblage au boîtier transite par contact via les nervures 11, le guide de lumière et le support avant d'être reprise par le boîtier, notamment au niveau du contact du moyen de rappel élastique avec le boîtier.

L'invention concerne également un procédé de montage d'un dispositif d'éclairage et/ou de signalisation. Notamment, l'invention concerne un procédé de montage d'un dispositif d'éclairage et/ou de signalisation pour véhicule automobile.

Un premier mode d'exécution du procédé selon invention est décrit ci-après.

Dans une première étape, on monte la source de lumière sur une première partie du dispositif d'éclairage et/ou de signalisation. Comme vu précédemment, on peut monter un circuit 6 comprenant une source de lumière 8 sur un support avant de lier mécaniquement ce support au boîtier. Alternativement, on peut tout d'abord lier le support au boîtier, puis monter la source de lumière sur le support.

Dans une deuxième étape, on monte le guide de lumière 7 sur un masque. Pour ce faire, on dispose par exemple le guide de lumière dans un chemin prévu sur le masque et on active des moyens de fixation pour immobiliser celui-ci par rapport au masque.

Les première et deuxième étapes peuvent avoir lieu l'une après l'autre ou être mises en oeuvre simultanément. La deuxième étape peut être mise en oeuvre avant la première étape.

Dans une troisième étape, on assemble le boîtier et le masque. Lors de l'assemblage, le guide de lumière vient en contact avec le support de sorte que les moyens de guidage et les moyens de positionnement guident le guide de lumière par rapport à la source de lumière et positionnent le guide de lumière par rapport à la source de lumière comme expliqué précédemment. Lors de cette étape, le support est également déplacé relativement au boîtier sous l'action de contact du guide de lumière. Aucune intervention d'un opérateur n'est nécessaire au niveau du guide de lumière ou de la source de lumière pour que le guide de lumière et la source de lumière soit positionnée correctement l'un par rapport à l'autre. Seule une intervention d'un opérateur ou d'un robot est nécessaire pour assembler le masque et le boîtier. Dans le procédé d'assemblage, le centrage ou le positionnement du guide de lumière relativement à la source lumineuse se fait donc automatiquement.

Dans une quatrième étape, une fois le masque et le boîtier assemblés, on rapporte une glace de fermeture pour fermer le boîtier. En outre, on met en place les moyens d'éclairage et/ou de signalisation permettant d'assurer les fonctions d'éclairage et/ou de signalisation du dispositif d'éclairage et/ou de signalisation.

Un mode particulier de réalisation d'un dispositif d'éclairage et/ou de signalisation selon invention a été décrit ci-dessus en détail. Néanmoins, un grand nombre de variantes de dispositifs d'éclairage et/ou de signalisation et de procédés de montage de tels dispositifs peuvent être réalisées de manière simple, notamment par simple inversion cinématique entre les composants du dispositif d'éclairage et/ou de signalisation.

Par exemple, le support mobile pourrait être monté sur le masque, entre le masque et une extrémité du guide de lumière et la source de lumière pourrait être montée directement sur le boîtier. En outre, la source de lumière pourrait être montée directement ou indirectement sur le masque alors que le guide de lumière est monté directement ou indirectement sur le boîtier. La source de lumière et le guide de lumière, pourraient être montés chacun sur un support distinct, l'un des supports étant lui-même monté sur le masque et l'autre support étant monté sur le boîtier. Enfin, ce pourrait être l'assemblage d'autres parties du dispositif d'éclairage et/ou de signalisation qui permet le guidage et le positionnement du guide de lumière relativement à la source de lumière, par exemple l'assemblage de la glace de fermeture au boîtier ou l'assemblage de la glace de fermeture au masque.

Par ailleurs, les moyens de guidage et/ou les moyens de positionnement peuvent être prévus sur une troisième partie du dispositif distincte des première et deuxième partie. Cette troisième partie étant rapportée entre les première et deuxième parties préalablement à l'étape d'assemblage des première et deuxième parties ou lors de l'étape d'assemblage des première et deuxième parties.

Avantageusement, la source de lumière 8 et le guide de lumière 7 contribuent à assurer une fonction de signalisation du type signalisation diurne ou feu clignotant.

Par exemple, le guide de lumière présente une ou plusieurs courbures et permet non seulement de déporter la source de lumière 8 mais également d'orienter le rayonnement de celle-ci en sortie du guide de lumière.

## Revendications

1. Dispositif d'éclairage et/ou de signalisation (1) d'un véhicule automobile, comprenant une source de lumière (8) et un guide de lumière (7) montés respectivement sur une première partie (2) et sur une deuxième partie (3) du dispositif, le dispositif comprenant des moyens de guidage (12, 13, 15, 16) et des moyens de positionnement (14, 11) permettant de guider le guide de lumière (7) par rapport à la source de lumière (8) et de positionner le guide de lumière (7) par rapport à la source de lumière (8) lors de l'assemblage des première et deuxième parties (2, 3) du dispositif, **caractérisé en ce que** la première partie (2) comprend un support (5) sur lequel est montée la source de lumière (8) le support (5) et la première partie (2) étant liés par une liaison glissière (33).
ou **en ce que**
la deuxième partie (3) comprend un support (5) sur lequel est monté le guide de lumière (7), le support (5) et la deuxième partie (3) étant liés par une liaison glissière (33).

2. Dispositif selon la revendication 1, **caractérisé en ce que** les moyens de guidage comprennent des rampes ou pentes (12, 13, 14, 15) destinées à coopérer par contact avec le guide de lumière.

3. Dispositif selon la revendication 1 ou 2, **caractérisé en ce que** les moyens de guidage sont situés sur la première partie et/ou sur la deuxième partie et/ou sur une troisième partie du dispositif.

4. Dispositif selon l'une des revendications précédentes, **caractérisé en ce que** les moyens de positionnement comprennent une rainure (14) et une nervure (11).

5. Dispositif selon l'une des revendications précédentes, **caractérisé en ce qu'**il comprend des moyens de maintien de la source de lumière sur la première partie et/ou des moyens de maintien du guide de lumière sur la deuxième partie.

6. Dispositif selon la revendication 1, **caractérisé en ce que** le support est mobile par rapport à la première ou à la deuxième partie entre deux positions extrêmes et est rappelé vers une des positions extrêmes par un moyen de rappel élastique (31).

7. Dispositif selon l'une des revendications précédentes, **caractérisé en ce que** les moyens de guidage et de positionnement coopèrent avec le guide de lumière, notamment avec une extrémité (19) aplatie du guide de lumière, et/ou avec la source de lumière.

8. Dispositif selon l'une des revendications précédentes, **caractérisé en ce que** le dispositif comprend un boîtier (2) fermé par une glace de fermeture (4), ladite première partie (2) du dispositif comprenant ledit boîtier.

9. Dispositif selon l'une des revendications précédentes, **caractérisé en ce que** le dispositif comprend un masque (3) situé à l'intérieur du boîtier, ladite deuxième partie comprenant ledit masque.

10. Dispositif selon l'une quelconque des revendications précédentes, **caractérisé en ce que** l'amplitude de mouvement de la liaison glissière (33) est limitée.

## Patentansprüche

1. Beleuchtungs- und/oder Signalvorrichtung (1) eines Kraftfahrzeugs, umfassend eine Lichtquelle (8) und einen Lichtleiter (7), die auf einem ersten Teil (2) bzw. einem zweiten Teil (3) der Vorrichtung montiert sind, wobei die Vorrichtung Führungsmittel (12, 13, 15, 16) und Positionierungsmittel (14, 11) umfasst, die es ermöglichen, den Lichtleiter (7) in Bezug zur Lichtquelle (8) zu führen und den Lichtleiter (7) in Bezug zur Lichtquelle (8) beim Zusammenbau des ersten und zweiten Teils (2, 3) der Vorrichtung zu positionieren, **dadurch gekennzeichnet, dass** der erste Teil (2) eine Stütze (5) umfasst, auf der die Lichtquelle (8) montiert ist, wobei die Stütze (5) und der erste Teil (2) durch eine Gleitverbindung (33) verbunden sind, oder dass der zweite Teil (3) eine Stütze (5) umfasst, auf der der Lichtleiter (7) montiert ist, wobei die Stütze (5) und der zweite Teil (3) durch eine Gleitverbindung (33) verbunden sind.

2. Vorrichtung nach Anspruch 1, **dadurch gekennzeichnet, dass** die Führungsmittel Rampen oder Gefälle (12, 13, 14, 15) umfassen, die dazu bestimmt sind, durch Kontakt mit dem Lichtleiter zusammenzuwirken.

3. Vorrichtung nach Anspruch 1 oder 2, **dadurch gekennzeichnet, dass** die Führungsmittel auf dem ersten Teil und/oder auf dem zweiten Teil und/oder auf einem dritten Teil der Vorrichtung angeordnet sind.

4. Vorrichtung nach einem der vorhergehenden Ansprüche, **dadurch gekennzeichnet, dass** die Positionierungsmittel eine Nut (14) und eine Rippe (11) umfassen.

5. Vorrichtung nach einem der vorhergehenden Ansprüche, **dadurch gekennzeichnet, dass** sie Mittel zum Halten der Lichtquelle auf dem ersten Teil und/oder Mittel zum Halten des Lichtleiters auf dem zweiten Teil umfasst.

6. Vorrichtung nach Anspruch 1, **dadurch gekennzeichnet, dass** die Stütze in Bezug zum ersten oder zum zweiten Teil zwischen zwei äußersten Positionen beweglich ist und in eine der äußersten Positionen durch ein elastisches Rückstellmittel (31) zurückgestellt wird.

7. Vorrichtung nach einem der vorhergehenden Ansprüche, **dadurch gekennzeichnet, dass** die Führungs- und Positionierungsmittel mit dem Lichtleiter, insbesondere mit einem abgeflachten Ende (19) des Lichtleiters, und/oder mit der Lichtquelle zusammenwirken.

8. Vorrichtung nach einem der vorhergehenden Ansprüche, **dadurch gekennzeichnet, dass** die Vorrichtung ein Gehäuse (2) umfasst, das durch eine Verschlussplatte (4) geschlossen ist, wobei der erste Teil (2) der Vorrichtung das Gehäuse umfasst.

9. Vorrichtung nach einem der vorhergehenden Ansprüche, **dadurch gekennzeichnet, dass** die Vorrichtung eine Maske (3) umfasst, die sich im Inneren des Gehäuses befindet, wobei der zweite Teil die Maske umfasst.

10. Vorrichtung nach einem der vorhergehenden Ansprüche, **dadurch gekennzeichnet, dass** die Bewegungsamplitude der Gleitverbindung (33) begrenzt ist.

## Claims

1. Lighting and/or signalling device (1) of a motor vehicle, comprising a light source (8) and a light guide (7) mounted respectively on a first part (2) and on a second part (3) of the device, the device comprising guiding means (12, 13, 15, 16) and positioning means (14, 11) making it possible to guide the light guide (7) relative to the light source (8) and to position the light guide (7) relative to the light source (8) during the assembly of the first and second parts (2, 3) of the device, **characterized in that** the first part (2) comprises a support (5) on which the light source (8) is mounted, the support (5) and the first part (2) being linked by a slide link (33), **or in that** the second part (3) comprises a support (5) on which the light guide (7) is mounted, the support (5) and the second part (3) being linked by a slide link (33).

2. Device according to Claim 1, **characterized in that** the guiding means comprise ramps or slopes (12, 13, 14, 15) intended to cooperate by contact with the light guide.

3. Device according to Claim 1 or 2, **characterized in that** the guiding means are situated on the first part and/or on the second part and/or on a third part of the device.

4. Device according to one of the preceding claims, **characterized in that** the positioning means comprise a groove (14) and a rib (11).

5. Device according to one of the preceding claims, **characterized in that** it comprises means for holding the light source on the first part and/or means for holding the light guide on the second part.

6. Device according to Claim 1, **characterized in that** the support is mobile relative to the first or to the second part between two extreme positions and is returned to one of the extreme positions by an elastic return means (31).

7. Device according to one of the preceding claims, **characterized in that** the guiding and positioning means cooperate with the light guide, notably with a flattened end (19) of the light guide, and/or with the light source.

8. Device according to one of the preceding claims, **characterized in that** the device comprises a casing (2) closed by a closing lens (4), said first part (2) of the device comprising said casing.

9. Device according to one of the preceding claims, **characterized in that** the device comprises a mask (3) situated inside the casing, said second part comprising said mask.

10. Device according to any one of the preceding claims, **characterized in that** the amplitude of movement of the slide link (33) is limited.
